# EUROPEAN PATENT SPECIFICATION

(11) **EP 3 648 621 B1**
(45) Date of publication and mention of the grant of the patent: **14.04.2021**
(21) Application number: 18768952.6
(22) Date of filing: 05.07.2018
(51) Int. Cl.: A23P 30/00, A23N 17/00

(54) **FEED AND FOOD PRODUCTION SYSTEM**
FUTTER- UND LEBENSMITTELPRODUKTIONSSYSTEM
SYSTÈME DE PRODUCTION D'ALIMENTS POUR HUMAINS ET ANIMAUX

(30) Priority: 07.07.2017 NL 1042454
(43) Date of publication of application: 13.05.2020
(73) Proprietor: MVM Holding B.V., 3927 CE Renswoude (NL)
(72) Inventor: VAN MOURIK, Nicolaas Willem, 3927 CE Renswoude (NL)
(74) Representative: van Dokkum, Willem Gerard Theodoor
(86) International application number: PCT/NL2018/050439
(87) International publication number: WO 2019/009716

(56) References cited:
- EP-A1- 2 465 780
- WO-A1-2006/093757
- WO-A2-2013/000985
- DE-C1- 3 729 139
- US-A- 4 401 019
- US-A- 5 474 411

## Description

The invention relates to a system for the production of animal feed and/or food products, for example livestock and animal feed products, by treatment of dry or non-dry raw materials supplied to the system, under control of a control system. The system comprises carrying out an assortment of one or more treatments from a group of different relatively static treatments such as initial, intermediate or final storage, heating, drying, cooling, maturing etc., and carrying out an assortment of one or more treatments from a group of different relatively dynamic treatments such as cleaning, mixing, grinding, crushing, etc., and carrying out transport operations during and between these treatments.

In particular, the present invention relates to the production of feed and/or food products, i.e. products which are used as feed for animals (feed) or as nutrients for human use (food). In particular, or at least for now primarily, but certainly not exclusively, the application of the system according to the invention is intended for the (bulk) production industry of, in particular, livestock and animal feeds.

Currently and usually, in the livestock and animal feed industry use is being made of substantially horizontally oriented production processes, in which the transport between different treatment steps (process steps) is oriented horizontally. The disadvantage of horizontal transport is that it costs a lot of energy and besides that, it is accompanied by product changes as a result of contamination, carry-over and separation of the transported raw materials, intermediate products and end products. The current regulations regarding the feed industry (livestock and animal feed) are heading in the direction of the requirements for the food industry (products for human consumption). Often, contamination is a substantial problem with (horizontal) transport and shooting (discharging). In order to be able to meet the requirements of professional customers in both animal feed and foodstuffs ("Every farmer its own feed"), there is a large need for energy and maintenance-efficient processes with extremely low contamination

WO2013/000985 A2 discloses a modular production plant comprising: a vertical stack of production modules for supporting production equipment; and a vertical stack of operator access modules adjacently connected to the vertically stacked production modules to allow operator access to the production modules, wherein the adjacently connected vertical stacks of production modules and operator access modules establish multiple stories of the modular production plant.

The object of the present invention is to provide a solution based on a vertically oriented production process with horizontal machine movements. Because the principle problem mainly originates from the transport of raw materials, transport must be minimized as much as possible.

One aspect of the invention is to move the (horizontal) treatment machines horizontally instead of, as usual, moving the raw materials horizontally. In the system according to the invention, for the necessary displacement of the substances used in the process, inter alia intermediate products, maximum use is being made of gravity.

According to the present invention, a system is provided for the production of products, such as animal feed and/or food products, for example, by treating dry or non-dry raw materials supplied to the system, comprising, under the control of a control system, carrying out an assortment of one or more treatments from a group of different static treatments such as initial, intermediate or final storage, heating, drying, cooling, maturing etc., and carrying out an assortment of one or more treatments from a group of different dynamic treatments such as cleaning, mixing, grinding, crushing, etc., and carrying out transport operations between and/or during said treatments, wherein the system comprises a housing and/or framework with vertically stacked, each horizontally extending, treatment layers, comprising static treatment layers, arranged for the predominantly static treatment of raw materials and/or intermediates, and comprising dynamic treatment layers, arranged for intermediate transport and predominantly dynamic treatment of raw materials and/or intermediates, the static treatment layers and the dynamic treatment layers alternating each other vertically.

The static treatment layers are provided with static treatment modules with an input docking port at the upper side and an output docking port at the bottom side. The static treatment modules are arranged for carrying out one or more of the predominantly static treatments. The dynamic treatment layers are provided with, under control of the control system, a displaceable, mobile treatment module with an input docking port at the upper side and an output docking port at the bottom side. The mobile treatment modules are arranged for carrying out one or more of the predominantly dynamic treatments. The mobile treatment modules and/or the static treatment modules are arranged such that, on the one hand, the mobile treatment modules under the control of the control system can be docked to one or more static treatment modules of a static treatment layer located above them, and on the other hand, under the control of the control system, the mobile treatment modules can be docked on one or more static treatment modules of a static treatment layer underneath them. Under the control of the control system, if the dock locations are different, the mobile treatment module is moved from the first docking location to the second docking location.

Preferably, one or more of the mobile treatment modules comprises, in addition to a treatment device, one or more input buffers and at least one output buffer. When docking to one or more of the static treatment modules of the above positioned static treatment layer, the one or more input buffers are filled with input material from these treatment layers. Subsequently, this input material is treated in the treatment device, for instance cleaned, mixed, grinded, crushed, etc. and fed as output material to the at least one output buffer. After docking this output buffer to one or more of the static treatment modules of the static treatment layer underneath, the contents of the output buffer are discharged in that one or more empty static treatment modules below.

Preferably, during treatment of the input material from the one or more input buffers by the treatment device, the relevant treatment module is moved from the first docking location to the second docking location, under the control of the control system. After the treatment, the output material thus obtained is fed to the at least one output buffer.

The above measures ensure that for both the static treatment modules and the mobile treatment modules the material is always supplied at the upper side and is discharge from the bottom side. After (only) once being transported completely upwards in the system, throughout the system the flow of material always flows from top to bottom at each process step under the influence of gravity. Transport of intermediates takes place horizontally, via the treatment layers ("storey layers"), where the predominantly dynamic processes take place in horizontally movable processing machines (mobile treatment modules), in which transport and processing take place simultaneously.

In order to be able to periodically automatically clean the mobile treatment modules (against contamination), preferably the system is provided with at least one cleaning channel, essentially extending vertically, passing through or intersecting the static and dynamic treatment layers. Under the control of the control system, the mobile treatment modules can be displaced to at least one cleaning location, which on the one hand is located within the operating range of the dynamic treatment layer to which the mobile treatment module belongs, and on the other hand is located within the operating range of the at least one cleaning channel.

The mobile treatment modules can be displaced, controlled by the control system, between the different docking locations respectively to and from the at least one cleaning location within the operating range of the dynamic treatment layer, of which the mobile treatment module is part of, by means of an XY manipulation system controlled by the control system. In an alternative embodiment, the mobile treatment modules are provided and arranged to be independently displaceable and are arranged to displace themselves between the different docking locations to and from the at least one cleaning location within the operating range of the dynamic treatment layer to which the mobile treatment module belongs, under the wired or wireless control from the control system.

Since the system according to the invention is built up mainly in height, this characteristic is preferably used in a synergistic manner by designing a tower-shaped housing or a framework with a mast-like structure and to provide them with blades and at least one electricity generator for the purpose of supplying electricity of the system. In this way the housing or the framework allowes for generating electricity from wind. The housing or the framework can also be provided with solar panels for the purpose of supplying the electricity for the system and/or for the purpose of generating heat for heating processes in the system.

The invention will now be discussed in more detail by means of the figure description below.

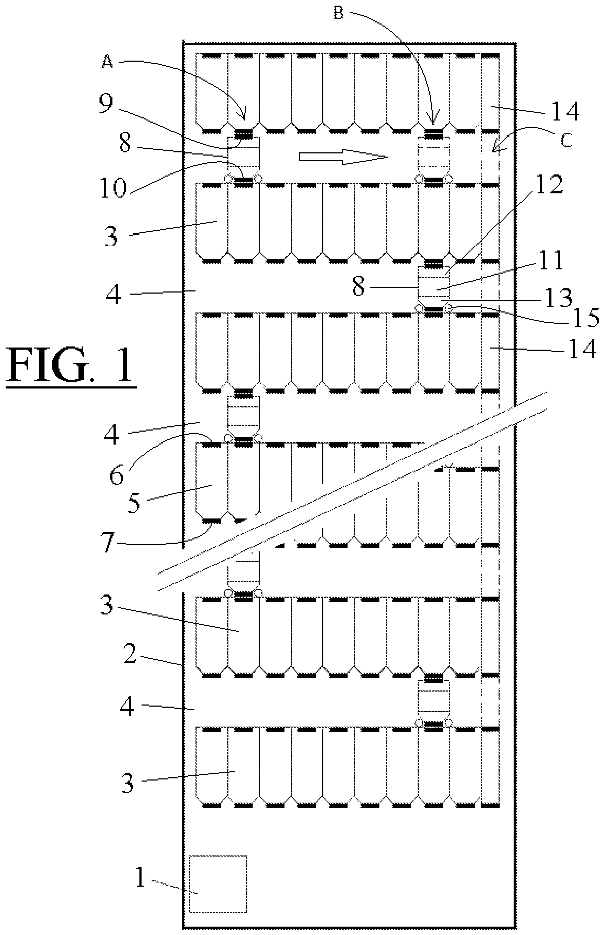

- Figure 1: shows schematically an embodiment of a system according to the invention.

Schematically, Figure 1 shows a system according to the invention for bulk production of dry or non-dry end products by treatment (converting, processing, etc.) of dry or non-dry raw materials supplied to the system. Under the control of a control system 1, the system is able to carry out an assortment of one or more treatments from a group of different relatively static treatments such as initial, intermediate or final storage, heating, drying, cooling, maturing etc., and to carry out an assortment of one or more treatments from a group of different relatively dynamic treatments such as cleaning, mixing, grinding, crushing, etc., and to carry out transport operations between and/or during these treatments.

The system comprises a housing and/or framework 2 with vertically (superimposed) stacked, each horizontally extending and vertically alternating, treatment layers, comprising static treatment layers 3, arranged for the predominantly static treatment of the raw materials and/or intermediate products, and comprising dynamic treatment layers 4, arranged for intermediate transport and for the predominantly dynamic treatment of raw materials and/or intermediates.

The static treatment layers 3 are provided with static treatment modules 5 having an input docking port 6 on the upper side and an output docking port 7 on the bottom side. The static treatment modules 5 are arranged for performing one or more of the predominantly static treatments, in particular (conditioned) storage of raw materials, auxiliary substances, intermediates, etc. The dynamic treatment layers 4 are provided, under the control of the control system 1, with movable, mobile treatment modules 8 with an input docking port 9 at the upper side and an output docking port 10 at the bottom side. The mobile treatment modules 8 are arranged to carry out one or more of the predominantly dynamic treatments, such as mixing, grinding etc. Under the control of the control system 1, the mobile treatment modules 8 and/or the static treatment modules 5 are arranged such that, on the one hand, the mobile treatment modules 8 can be docked to one or more static treatment modules 5 of a static treatment layer 3 lying above and, on the other hand under the control of the control system 1, the mobile treatment modules 8 can be docked on one or more static treatment modules 5 of a static treatment layer 3 located underneath. The mobile treatment module 8 (only if the docking locations are different) is moved under the control of the control system 1 from the first docking location A to the second docking location B.

Usually, in addition to a treatment device 11 (processing machine), the mobile treatment modules 8 comprise one or more input buffers 12 and at least one output buffer 13. In case of docking to one or more static treatment modules 5 of the above static treatment layer 3, the one or more input buffers 12 are filled from above with input material. Subsequently, the input material is treated in the treatment device 11, for instance cleaned, mixed, grinded, crushed, etc. and fed as output material to the at least one output buffer 13. After docking to one or more static treatment modules 5 of the lower static treatment layer 3, the output buffer discharges its content into one or more static treatment modules 5.

During treatment (processing) of the input material from the one or more input buffers 12 by the treatment device 11 and supplying the (processed) output material thus obtained to the at least one output buffer 13 after the treatment, the respective treatment module 8 is moved, under the control of the control system 1, from the first docking location A to the second docking location B.

Preferably, the system according to the invention is furthermore provided with at least one, substantially vertically extending, cleaning channel 14, which crosses/intersects or passes the static and dynamic treatment layers 3 and 4. Under the control of the control system 1, the mobile treatment modules 8 are able to be displaced to a least one cleaning location C. On the one hand, the cleaning location is located within the operating range of the dynamic treatment layer 4, of which the mobile treatment module 8 is part of. On the other hand, the cleaning location is located within the operating range of the at least one cleaning channel 14.

Under the control of the control system 1, the mobile treatment modules 8 are able to be displaced between the different docking locations A, B etc., for example, or to and from the at least one cleaning location C within the operating range of the relevant dynamic treatment layer 4, by means of a XY manipulation system (not shown) controlled by the control system. Instead, the mobile treatment modules can be provided as independently displaceable modules and can be arranged to be able to displace themselves, under wired or wireless control from the control system 1, between the different docking locations A, B, respectively, to and from the at least one cleaning location C within the operating range of the dynamic treatment layer 4 of which the mobile treatment module 8 is part of. This is symbolically represented in Fig.1 by displacement wheels 15.

From figure 1 it is easy to construct a representation of an embodiment, in which the housing 2 has a tower-like shape or the framework is mast-shaped and is provided with blades and with at least one electricity generator for the supply of electricity to the system. The housing 2 or the framework can also be provided with solar panels for the supply of electricity to the system and/or for the purpose of generating heat for the heating processes in the system, for instance for the purpose of drying and/or heating of the material to be produced and/or for the purpose of the heating the cleaning liquid and drying the cleaned modules.

For the sake of completeness, a concise process description of the current situation is given below, which is commonly used by all animal feed production companies. The description will be described by means of common steps.

### Taking in Raw Materials

The supply of raw materials takes place in two ways, per ship and per axle (lorry). The raw materials are deposited in an intake pit, including horizontal transport (in particular determining the capacity of intake) then vertical transport, which deposits on horizontal transport which, by means of a choice of valves, deposits the raw material into a precontrolled silo. Liquids are mainly supplied per axle and stored in tanks, this "tank farm" is usually located in a basin. An average animal feed producer uses approximately eight liquids, and approximately 8% liquid is added to the dry raw materials during the production of the half-finished intermediate product. Small components (minerals, premixes and powders) are usually supplied only per axle and stored in special storage units.

### Dosing

Recipes are based on nutritional value, crude fiber, structure and energy. Crude raw materials are weighed by type in a dosing scale according to recipe. Dosing weight is between 2000 and 6000 kilograms. Small components are weighed in separate scales and later added to the raw materials. Liquids are added at a later stage (after a number of treatments of the raw materials). When a recipe (hereinafter referred to as "Batch") is ready and the destination is released after the scales, the batch will discharge in the next step, like separating in fractions, premixing or directly a size reduction step.

### Separating in fractions

Part of the raw materials has a small enough particle size, so that a size reduction step is not necessary (from efficiency point of view). This fraction will proceed to the mixing step by means of a "bypass". Separation is carried out with the fraction sieve. The fractions can be changed by replacing one or more sieve decks(screens) with a deck having a different mesh width.

### Pre-mixing, grinding, crushing/rolling

Pre-mixing has the advantage that the size reduction step is carried out evenly. When premixing is not carried out, the size reduction step will be less efficient because raw materials have a big difference in hardness and/or toughness. Size reduction is done by means of hammer mills and/or crusher rollers. The entire batch is size reduced to the desired fractions. After the size reduction, the batch is discharged into the next destination when it is released.

### Blending

After storage, the batch is discharged into the blender. These are still raw materials. Immediately after the discharge of the raw materials, the weighed small components are discharged into the mixer, followed by a blending cycle of approximately 90 seconds. Then, the liquids with a low viscosity are dosed directly from the tank park, dosing is done by liquid mass meters. When all the liquids have been dosed, next an after blend time of approximately 90 seconds is performed.

### Mixing

For certain animal feed types (especially pig and cattle feed) liquids are added having a high viscosity. These cannot be added homogeneously in the blender. This is why these liquids are added to the mixer. Mixing is, unlike blending, an "online" process, the batch is dosed over the mixer and monitored on flow, this flow determines the flow rate of the liquid/substances to be added and the batch is collected in the mixer bottom-bunker.

After the above described treatments, the recipe is ready, and a half-finished intermediate product is obtained. When the recipe is ready (i.e. a feed flour) it will be able to be transported to the car. If it is a half-finished intermediate product, the batch will be displaced to the so-called "press shop".

### Pressing the half-finished intermediate product

The batch is discharged into the flour press-cell, from this cell (there are several) the semi-finished product is fed to the press line. This press process can be set up in different ways. The treatment of each process part will be described below.

### Dosing

The semi-finished intermediate product is fed by volume to a mixer from the flour press-cell. Here steam is added to bring the semi-finished intermediate product to a desired temperature. This is necessary for various reasons, steam (read temperature) kills the bacteria present and unlocks the flour cells for better digestion. The compaction step follows after the mixer.

### Compaction

This is performed in different ways, it can be done by means of an expander/BOA, extruder or a press. In broad terms, it aims at:
- Opening up of flour cells.
- Killing bacteria, (mainly in the expander)
- Maturing process
- Increasing the final capacity
- Improving the quality of the final product.

### Pressing

The pressing step provides the final shape to the final product, it adds little to the product.

### Cooling

The final temperature of the end product is high, between 50 and 90 °C, due to the addition of steam and, additionally, to the absorbed energy of the compaction/pressing machines.

As a result, it is necessary to cool the product, by means of forcedly drawing ambient air through the finished product. Consequently, part of the moisture (steam condenses into water) is removed by means of evaporation by means of the air flow. After cooling, the finished product is passed over a grit screen.

### Grit screen/sieve

Grit will occur during production and internal transport, this is separated from the finished product by means of a sieve. The grit (is usable material) is fed back to the press process and is therefore reused.

### Coating/vacuum coating

If desired, enzymes and oils are added to the finished product. This is often done in a vacuum coater. Porous products absorb up to 6% of these liquids. This increases the feed value. Standard coating is possible in an online processing step and in a batch processing step. Vacuum coating is only possible in a batch processing step. After coating, the end product is ready for storage.

### Storage

After storage and during loading in the truck, the end product will once again be passed over a grit screen. This has the purpose of separating all the grit from the end product resulting from the internal transport. This grit is then recycled to a grit cell, usually located in the raw material storage. The grit is cut into similar recipes.

### General

During the entire process, a large part of the transport machines and the machine tools has an underpressure to prevent problems with dust. All the sucked-up dust is returned to the process.

## Claims

1. System for the production of animal feed and/or food products, by treatment of raw materials supplied to the system, comprising, under the control of a control system (1), carrying out an assortment of one or more treatments from a group of different static treatments, carrying out an assortment of one or more treatments from a group of different dynamic treatments, and transport operations carried out between and/or during these treatments,
which system comprises a housing and/or framework (2) with vertically stacked treatment layers, each extending substantially horizontally, of which the static treatment layers (3), arranged for the predominantly static treatment of raw materials and/or intermediates, and the dynamic treatment layers (4), arranged for intermediate transport and/or the predominantly dynamic treatment of raw materials and/or intermediates, alternate each other vertically **characterized, in that**
the static treatment layers are provided with static treatment modules (5) with at least one input docking port (6) on the upper side and at least one output docking port (7) on the bottom side, which static treatment modules are arranged for performing one or more of the predominantly static treatments, wherein the dynamic treatment layers, under the control of the control system, are provided with movable mobile treatment modules (8) with an input docking port (9) on the upper side and an output docking port (10) on the bottom side, which mobile treatment modules are arranged for carrying out one or more treatments of the predominantly dynamic treatments, wherein the mobile treatment modules and/or the static treatment modules are arranged such that on the one hand the mobile treatment modules, under the control of the control system, are able to be docked to the static treatment modules of an above positioned static treatment layer and, on the other hand, are able to be docked, under the control of the control system, to one or more static treatment modules of a static treatment layer underneath, wherein the respective mobile treatment module, if the dock locations are different, under the control of the control system, is moved from the first docking location (A) to the second docking location (B).

2. System according to claim 1, wherein one or more of the mobile treatment modules comprises, in addition to a treatment device (11), one or more input buffers (12) and at least one output buffer (13), wherein upon docking to one or more static treatment modules of the above positioned static treatment layer, the one or more input buffers are filled with input material, which subsequently is treated in the treatment device, and fed as output material to the at least one output buffer which, after docking to one or more static treatment modules of the lower static treatment layer, discharges its contents into one or more lower positioned static treatment modules.

3. System according to claim 2, wherein the respective treatment module, during the treatment of the input material from the one or more input buffers by the treatment device, is moved from the first docking location to the second docking location under the control of the control system, and the output material thus obtained is fed to the at least one output buffer.

4. System according to one of the preceding claims, provided with at least one, substantially vertically extending, cleaning channel (14), which passes or intersects the static and dynamic treatment layers, wherein the mobile treatment modules can be displaced, under the control of the control system, to at least one cleaning location (C), which on the one hand is located within the operating range of the dynamic treatment layer to which the mobile treatment module belongs, and on the other hand is located within the operating range of the at least one cleaning channel.

5. System according to one of the claims 1 to 4, in which the mobile treatment modules are displaced by means of an XY manipulation system, controlled by the control system, between the different docking locations respectively to and from the at least one cleaning location within the operating range of the dynamic treatment layer, of which the mobile treatment module is part of, under the control of the control system.

6. System according to one of the claims 1 to 5, wherein the mobile treatment modules are arranged to be independently displaceable, and are arranged to displace itself between the different docking locations to and from the at least one cleaning location within the operating range of the dynamic treatment layer to which the mobile treatment module belongs, under the wired or wireless control from the control system.

7. System according to one of the preceding claims, wherein the housing is tower-shaped or the framework is mast-shaped, and wherein the housing or the framework is provided with blades and at least one electricity generator for the supply of electricity to the system.

8. System according to one of the preceding claims, wherein the housing or the framework is provided with solar panels for the electricity supply of the system and/or for the purpose of generating heat for heating processes in the system.

## Patentansprüche

1. System für die Produktion von Tierfutter und/oder Lebensmittelprodukten durch Behandlung von Rohmaterialien, die dem System zugeführt werden, wobei das System unter der Steuerung eines Steuersystems (1) ein Ausführen einer Auswahl von einer oder mehreren Behandlungen aus einer Gruppe verschiedener statischer Behandlungen, ein Ausführen einer Auswahl von einer oder mehreren Behandlungen aus einer Gruppe verschiedener dynamischer Behandlungen und Transportoperationen umfasst, die zwischen diesen und/oder während dieser Behandlungen ausgeführt werden,
wobei das System ein Gehäuse und/oder einen Rahmen (2) mit vertikal übereinander angeordneten Behandlungsebenen umfasst, wobei sich jede im Wesentlichen horizontal erstreckt, von denen die statischen Behandlungsebenen (3), die für die vorwiegend statische Behandlung von Rohmaterialien und/oder von Zwischenprodukten angeordnet sind, und die dynamischen Behandlungsebenen (4), die für den Zwischentransport und/oder die vorwiegend dynamische Behandlung von Rohmaterialien und/oder von Zwischenprodukten angeordnet sind, vertikal einander abwechseln, **dadurch gekennzeichnet, dass**
die statischen Behandlungsebenen mit statischen Behandlungsmodulen (5) mit mindestens einem Eingangs-Dockinganschluss (6) auf der oberen Seite und mit mindestens einem Ausgangs-Dockinganschluss (7) auf der unteren Seite versehen sind, wobei die statischen Behandlungsmodule angeordnet sind, um eine oder mehrere der vorwiegend statischen Behandlungen durchzuführen, wobei die dynamischen Behandlungsebenen unter der Steuerung des Steuersystems mit beweglichen mobilen Behandlungsmodulen (8) mit einem Eingangs-Dockinganschluss (9) auf der oberen Seite und mit einem Ausgangs-Dockinganschluss (10) auf der unteren Seite versehen sind, wobei die mobilen Behandlungsmodule angeordnet sind, um eine oder mehrere Behandlungen der vorwiegend dynamischen Behandlungen durchzuführen, wobei die mobilen Behandlungsmodule und/oder die statischen Behandlungsmodule derart angeordnet sind, dass einerseits die mobilen Behandlungsmodule unter der Steuerung des Steuersystems in der Lage sind, an die statischen Behandlungsmodule einer oben positionierten statischen Behandlungsebene angedockt zu werden, und andererseits aber in der Lage sind, unter der Steuerung des Steuersystems an ein oder an mehrere statische Behandlungsmodule einer Unterseite einer statischen Behandlungsebene angedockt zu werden, wobei das jeweilige Behandlungsmodul dann, wenn die Andockorte unterschiedlich sind, unter der Steuerung des Steuersystems von dem ersten Andockort (A) zu dem zweiten Andockort (B) bewegt wird.

2. System nach Anspruch 1, wobei ein oder mehrere der mobilen Behandlungsmodule zusätzlich zu einer Behandlungsvorrichtung (11) ein oder mehrere Eingangspuffer (12) und mindestens einen Ausgangspuffer (13) umfassen, wobei beim Andocken an ein oder an mehrere statische Behandlungsmodule der oberhalb positionierten statischen Behandlungsebene der eine oder die mehreren Eingangspuffer mit Eingangsmaterial gefüllt werden, das nachfolgend in der Behandlungsvorrichtung behandelt und als Ausgangsmaterial zu dem mindestens einen Ausgangspuffer zugeführt wird, der, nachdem er an ein oder an mehrere statische Behandlungsmodule der unteren statischen Behandlungsebene angedockt hat, seine Inhalte in ein oder in mehrere tiefer positionierte statische Behandlungsmodule entleert.

3. System nach Anspruch 2, wobei das jeweilige Behandlungsmodul während der Behandlung des Eingangsmaterials von dem einen oder von den mehreren Eingangspuffern durch die Behandlungsvorrichtung unter der Steuerung des Steuersystems von dem ersten Andockort zu dem zweiten Andockort bewegt wird, und das Ausgangsmaterial auf diese Weise dem mindestens einen Ausgangspuffer zugeführt wird.

4. System nach einem der vorhergehenden Ansprüche, das mit mindestens einem, im Wesentlichen sich vertikal erstreckenden Reinigungskanal (14) versehen ist, der über die statischen und dynamischen Behandlungsebenen verläuft oder diese schneidet, wobei die mobilen Behandlungsmodule unter der Steuerung des Steuersystems zu mindestens einem Reinigungsort (C) verschoben werden können, der einerseits innerhalb des Betriebsbereichs der dynamischen Behandlungsebene, zu dem das mobile Behandlungsmodul gehört, angeordnet ist, und andererseits innerhalb des Betriebsbereichs des mindestens einen Reinigungskanals angeordnet ist.

5. System nach einem der Ansprüche 1 bis 4, in dem die mobilen Behandlungsmodule mittels eines XY-Bedienungssystems, das von dem Steuersystem gesteuert wird, zwischen den verschiedenen Andockorten jeweils nach und von dem mindestens einen Reinigungsort innerhalb des Betriebsbereichs der dynamischen Behandlungsebene, von der das mobile Behandlungsmodul ein Teil ist, unter der Steuerung des Steuersystems verschoben werden.

6. System nach einem der Ansprüche 1 bis 5, wobei die mobilen Behandlungsmodule angeordnet sind, um unabhängig verschiebbar zu sein, und angeordnet sind, um selbst zwischen den verschiedenen Andockorten nach und von dem mindestens einen Reinigungsort innerhalb des Betriebsbereichs der dynamischen Behandlungsebene, zu der das mobile Behandlungsmodul gehört, unter der drahtgebundenen oder drahtlosen Steuerung von dem Steuersystem zu verschieben.

7. System nach einem der vorhergehenden Ansprüche, wobei das Gehäuse turmförmig oder der Rahmen mastförmig ist, und wobei das Gehäuse oder der Rahmen mit Flügeln und mit mindestens einem elektrischen Generator für die Versorgung des Systems mit Elektrizität versehen ist.

8. System nach einem der vorhergehenden Ansprüche, wobei das Gehäuse oder der Rahmen mit Solarmodulen für die Elektrizitätsversorgung des Systems und/oder zum Zwecke der Erzeugung von Wärmeprozessen in dem System versehen ist.

## Revendications

1. Système de production d'aliments pour animaux et/ou pour humains, par traitements de matières premières fournies au système, comprenant, sous la commande d'un système de commande (1), l'exécution d'un assortiment d'un ou de plusieurs traitements parmi un groupe de traitements statiques différents, l'exécution d'un assortiment d'un ou de plusieurs traitements parmi un groupe de traitements dynamiques différents, et des opérations de transport effectuées entre et/ou pendant ces traitements,
lequel système comprend un boîtier et/ou une structure (2) avec des couches de traitements empilées verticalement, chacune s'étendant sensiblement horizontalement, dont les couches de traitements statiques (3), agencées pour le traitement majoritairement statique de matières premières et/ou d'intermédiaires, et les couches de traitement dynamique (4), agencées pour le transport intermédiaire et/ou le traitement majoritairement dynamique de matières premières et/ou d'intermédiaires, s'alternent les unes avec les autres verticalement, **caractérisé en ce que**
les couches de traitements statiques sont pourvues de modules de traitements statiques (5) avec au moins un port d'accueil d'entrée (6) sur la face supérieure et au moins un port d'accueil de sortie (7) sur la face inférieure, lesquels modules de traitements statiques sont agencées pour effectuer un ou plusieurs des traitements majoritairement statiques, dans lequel les couches de traitements dynamiques, sous la commande du système de commande, sont pourvues de modules de traitements mobiles pouvant se déplacer (8) avec un port d'accueil d'entrée (9) sur la face supérieure et un port d'accueil de sortie (10) sur la face inférieure, lesquels modules de traitements mobiles sont agencés pour effectuer un ou plusieurs traitements parmi les traitements majoritairement dynamique, dans lequel les modules de traitements mobiles et/ou les modules de traitements statiques sont agencés de telle sorte que, d'une part, les modules de traitements mobiles, sous la commande du système de commande, puissent être accueillis aux modules de traitements statiques d'une couche de traitements statiques située au-dessus et, d'autre part, puissent être accueillis, sous la commande du système de commande, à un ou plusieurs modules de traitements statiques d'une couche de traitement statique en dessous, dans lequel le module de traitement mobile respectif, si les emplacements d'accueil sont différents, sous la commande du système de commande, est déplacé du premier emplacement d'accueil (A) au deuxième emplacement d'accueil (B).

2. Système selon la revendication 1, dans lequel un ou plusieurs des modules de traitement mobiles comprennent, en outre un dispositif de traitement (11), un ou plusieurs tampons d'entrée (12) et au moins un tampon de sortie (13), dans lequel lors de l'accueil à un ou plusieurs modules de traitement statiques de la couche de traitement statique positionnée ci-dessus, le ou les tampons d'entrée sont remplis de matériau d'entrée, qui sont ensuite traitées dans le dispositif de traitement, et amenées en tant que matériau de sortie audit au moins un tampon de sortie qui, après avoir été accueilli à un ou plusieurs modules de traitements statiques de la couche de traitements statiques inférieure, décharge son contenu dans un ou plusieurs modules de traitements statiques positionnés plus bas.

3. Système selon la revendication 2, dans lequel le module de traitement respectif, pendant le traitement du matériau d'entrée provenant dudit un ou de plusieurs tampons d'entrée par le dispositif de traitement, est déplacé du premier emplacement d'accueil au deuxième emplacement d'accueil sous la commande du système de commande, et le matériau de sortie ainsi obtenu est amené audit au moins un tampon de sortie.

4. Système selon l'une des revendications précédentes, pourvu d'au moins un canal de nettoyage (14) s'étendant sensiblement verticalement, qui passe ou croise les couches de traitements statiques et dynamiques, dans lequel les modules de traitements mobiles peuvent être déplacés, sous la commande du système de commande, vers au moins un emplacement de nettoyage (C), qui d'une part se trouve dans la zone de fonctionnement de la couche de traitement dynamique à laquelle le module de traitement mobile appartient, et d'autre part se trouve dans la plage de fonctionnement dudit au moins un canal de nettoyage.

5. Système selon l'une des revendications 1 à 4, dans lequel les modules de traitement mobiles sont déplacés au moyen d'un système de manipulation XY, commandé par le système de commande, entre les différents emplacements d'accueil respectivement vers et depuis ledit au moins un emplacement de nettoyage dans la plage de fonctionnement de la couche de traitement dynamique, dont le module de traitement mobile fait partie, sous la commande du système de commande.

6. Système selon l'une des revendications 1 à 5, dans lequel les modules de traitements mobiles sont agencés de manière à pouvoir être déplacés indépendamment, et à se déplacer entre les différents emplacements d'accueil vers et depuis ledit au moins un emplacement de nettoyage dans la plage de fonctionnement de la couche de traitement dynamique dont fait partie le module de traitement mobile, sous la commande câblée ou sans fil du système de commande.

7. Système selon l'une des revendications précédentes, dans lequel le boîtier est en forme de tour ou la structure est en forme de mât, et dans lequel le boîtier ou la structure est pourvu de pales et d'au moins un générateur d'électricité pour l'alimentation en électricité du système.

8. Système selon l'une des revendications précédentes, dans lequel le boîtier ou la structure est pourvu de panneaux solaires pour l'alimentation électrique du système et/ou dans le but de générer la chaleur pour les procédés de chauffage dans le système.
